(19) Europäisches Patentamt
European Patent Office
Office européen des brevets

(11) **EP 2 625 072 B1**

(12) **EUROPEAN PATENT SPECIFICATION**

(45) Date of publication and mention
of the grant of the patent:
**01.06.2016 Bulletin 2016/22**

(51) Int Cl.:
*B60R 21/235* (2006.01)     *B60R 21/23* (2006.01)
*B60R 21/262* (2011.01)

(21) Application number: **11831385.7**

(22) Date of filing: **03.10.2011**

(86) International application number:
**PCT/US2011/054554**

(87) International publication number:
**WO 2012/047785 (12.04.2012 Gazette 2012/15)**

(54) **AUTOMOBILE SIDE CURTAIN AIRBAG MODULES COMPRISING POLYESTER AIRBAG WITH GAS INFLATORS**

KRAFTFAHRZEUG-SEITENAIRBAGMODULE MIT EINEM POLYESTERAIRBAG MIT GASINFLATOREN

MODULES DE COUSSIN DE SÉCURITÉ GONFLABLES EN RIDEAU LATÉRAL POUR AUTOMOBILES, COMPRENANT UN COUSSIN DE SÉCURITÉ GONFLABLE EN POLYESTER ET DES GONFLEURS À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2010 US 389442 P**

(43) Date of publication of application:
**14.08.2013 Bulletin 2013/33**

(73) Proprietor: **Invista Technologies S.à r.l.
9000 St. Gallen (CH)**

(72) Inventors:
• **SCHMITT, Thomas, Edward
Concord, NC 28027 (US)**
• **BARNES, Todd, C.
Kingsto, Ontario K7M 5Y9 (CA)**

(74) Representative: **Cockerton, Bruce Roger
Carpmaels & Ransford LLP
One Southampton Row
London WC1B 5HA (GB)**

(56) References cited:
WO-A1-2008/094317     DE-A1-102009 009 905
US-A- 5 208 097       US-A1- 2002 130 537
US-A1- 2006 252 322   US-A1- 2009 215 343
US-B2- 7 375 042      US-B2- 7 498 280

**Description**

**FIELD OF THE INVENTION**

The invention relates to the automobile occupant safety industry in general, and in particular, to automobile airbag modules comprising polyester fabric airbags and airbag gas inflator devices. Also disclosed is a method of designing an airbag module based on the Critical Gas Temperature of the polyester fabric.

**BACKGROUND OF THE TECHNOLOGY**

An airbag is a supplemental restraint device consisting of a flexible envelope designed to inflate rapidly in an automobile collision. Airbags work by monitoring a number of related sensors within the vehicle, including accelerometers, impact sensors, side door pressure sensors, wheel speed sensors, gyroscopes, brake pressure sensors, and seat occupancy sensors. When the requisite "threshold" has been reached or exceeded, the airbag control unit will trigger the ignition of a gas generator propellant to rapidly inflate a fabric bag. As the vehicle occupant collides with and squeezes the bag, the gas escapes in a controlled manner through small vent holes. The airbag's volume and size of the vents in the bag are tailored to each vehicle type, to spread out the deceleration of the occupant over time and space.

Airbags typically inflate through the use of pyrotechnic devices that ignite solid propellant inside the airbag inflator. The burning propellant generates inert gas that rapidly inflates the airbag in approximately 20 to 30 milliseconds for frontal airbags, and approximately 40 to 50 milliseconds for side curtain airbags. Because side curtain airbags inflate slower than frontal airbags, a lower burning temperature propellant is often used. The use of hot gas allows the airbag to achieve the required pressure with a smaller mass of gas than would be the case using lower temperatures. However, the hot gas can pose a risk of thermal burns if it comes into contact with the skin during deployment and occupant interaction.

Airbags are typically made from nylon and, sometimes, polyester fabrics that are designed to withstand high pressures and temperatures. Additionally, airbags are usually not one piece, but multiple pieces with sewn seams in a particular shape that depends on the application. Another method is to form the airbag on a loom wherein two layers of fabric are produced and the weaving pattern forms seams which join the two fabric layers in the pattern of the airbag. This technique is referred to as a 'one piece woven' or OPW airbag. Therefore, the seams that join the pieces together must also be able to withstand the high pressures and temperatures without rupturing. If the seams rupture under heat and pressure, catastrophic failure of the airbag will occur resulting in severe injury to the occupant.

United States Patent Nos. 5,236,775 and 5,637,114 disclose polyester fabric designs for airbags. U.S. Patent No. 5,540,965 discloses a woven polyester airbag obtained by a shrinkage-setting treatment, with a preferred tensile elongation at break between 9 and 18%. Japanese Application No. 7-186858 discloses a lightweight polyester airbag fabric woven from polyester filament yarns having a tenacity of (79.4 cN/tex) and a breaking elongation of 15%. European Patent No. 0 442 373 discloses a polyester airbag fabric using yarns of lower denier. The yarn tenacity was 66 cN/tex with an elongation at break of 19% and a hot air shrinkage of 4.7% at 200°C. U.S. Patent No. 5,637,114 discloses a polyester uncoated airbag fabric. A 470 dtex, 100 filament yarn was woven in a rip-stop construction. The yarn had a tenacity of 66.8 cN/tex and a breaking elongation of 21.5% with a hot air shrinkage at 200°C of 7.4%. U.S. Patent No. 5,902,672 discloses a polyester uncoated airbag fabric using a modified huckaback or crepe weave. U.S. Patent 7,375,042 introduces the concept of 'Instantaneous Thermal Creep' (ITC) as a method to compare the behavior of polyester and nylon yarns and airbag fabrics. Japanese Application 7-90747 discloses both nylon and polyester fabrics woven to manufacturer, after heat setting and calendaring uncoated airbag fabrics.

DE102009009905 A1 discloses how to strengthen fabric for airbags to try and mimic the properties of nylon, in accordance with the industry norm.

**SUMMARY OF THE INVENTION**

The material properties of polyester fabrics vary with temperature, such that the fabric will exhibit higher stretch under load ("fabric creep") as the temperature increases ("hot creep"). Polyester fabrics can have much different creep properties than nylon fabrics. Hot creep, particularly around the seams, is the primary mode of failure in polyester airbags because it creates a preferred path for hot airbag module gases to leak. The leaking hot gas melts the polyester fiber near the exit point, and leads to catastrophic bag leakage. This phenomenon is greater with polyester airbags than with nylon airbags, thus limiting the adoption of polyester for airbag modules. Polyester fabrics, however, are less expensive than nylon fabrics. Therefore, there is a need for polyester airbags that can approximate the creep and thermal resistance of nylon airbags.

Unfortunately, the above art is silent on the key combination of fabric composition, the thermal resistance and creep properties of the fibers and fabric, and the maximum allowable gas inflator temperature necessary to optimize the performance of a module comprising polyester fabrics. Therefore it is desirable to find a method that will facilitate the matching of specific polyester fabrics with gas inflators to create an airbag module that will not suffer catastrophic failure. It would also be highly desirable to develop polyester airbags from this method that could compete with existing nylon airbags.

Because side curtain modules operate at lower pressures and temperatures vs. frontal and side impact modules, the performance of modules comprising airbags of polyester yarns with high Instantaneous Thermal Creep ("ITC") behavior (as compared with nylon) can be acceptable for side curtain modules, but unacceptable for frontal and side impact modules. The invention disclosed herein provides a method that recognizes the performance requirements for side curtain airbag modules comprising polyester yarns and fabrics and the difference in those characteristics from driver and passenger airbags. This difference permits certain modules comprising polyester fabrics to perform satisfactorily, even when modules are preheated and deployed hot ("hot conditioned"). The hot creep and thermal properties of polyester yarns and fabrics have been measured and unexpectedly found to define a new module design factor called the "Critical Gas Temperature", which is the maximum temperature of the inflation gas before the potential of polyester fiber melting, exceeds what is typical of a technically acceptable nylon fabric airbag.

In one aspect, an article according to claim 1 is disclosed comprising an airbag module, where the airbag module comprises a cut and sewn polyester airbag having a critical gas temperature and a gas inflator, which provides a gas temperature between about 230K and 750K that does not exceed the critical gas temperature of the polyester airbag. The polyester airbag comprises yarns with 100°C Instantaneous Thermal Creep values greater than 0.5% to about 3%. The polyester yarns have a linear density of 200 to about 650dtex, a linear density per filament of 2 to 7dtex and an uncoated fabric weight of 150g/m$^2$ to 270g/m$^2$. The coated polyester airbag can also be of one-piece woven construction.

In another aspect, a corresponding method of designing an airbag module is disclosed by independent claim 9.

## BRIEF DESCRIPTION OF THE FIGURES

FIGURE 1: Illustration of automobile side curtain airbag.
FIGURE 2: Example of seam failure of polyester fabric. Fabric creep enlarges the needle holes which permit a rush of hot gas to burn through the seam.
FIGURE 3: Graph of Dimensional Change verses Temperature used to determine the ITC.
FIGURE 4: Thermal Mechanical Analysis Yarn Creep versus Fabric Creep Hole Size.
FIGURE 5: Layout for fabric creep test.
FIGURE 6: Pictures of pin holes created by the Hot Seam Combing test.

## DETAILED DESCRIPTION

Disclosed is an article comprising an airbag module comprising a polyester airbag having a critical gas temperature and a gas inflator, where the gas inflator provides a gas temperature between about 230K and 750K that does not exceed the critical gas temperature of the polyester airbag. The polyester airbag can further comprise polyester yarns with 100°C Instantaneous Thermal Creep (ITC) values greater than 0.5% to about 3%.

Also disclosed is a method of designing an airbag module comprising selecting a polyester airbag having a critical gas temperature; determining the critical gas temperature of the airbag; providing a gas inflator that provides a gas temperature which does not exceed the critical gas temperature; and combining the polyester airbag with the gas inflator to provide the module. The critical gas temperature can be determined by testing yarn and fabric creep properties, including the yarn ITC, on one or more polyester fabrics. Further, the critical gas temperature can be determined by testing the air permeability of fabrics after simulated airbag fabric loading.

Acceptable airbag performance is manifest in the Instantaneous Thermal Creep (ITC) of a polyester yarn used in an airbag fabric. The amount of airbag gas leakage is related to the ITC of the yarn and the tendency for the yarns in a polyester fabric to stretch and create an opening between the yarns that causes less resistance and increased flow of inflation gases through the opening. The hot creep and thermal properties of polyester yarns and fabrics have been measured and unexpectedly found to define a new module design factor called the "Critical Gas Temperature", which is the maximum allowable temperature of the inflation gas before the quantity of polyester yarn raised to its melting point exceeds that of nylon yarns successfully used in modules comprising hot gas inflators with temperatures up to 1100K.

The Critical Gas Temperature is a function of the yarn ITC, heat capacity of polyester, heat of fusion of polyester, and the fabric weight. Specifically, the lower the yarn ITC, higher the heat capacity and heat of fusion, and higher the fabric weight, the higher the Critical Gas Temperature. Surprisingly, it has been found that a polyester airbag can replace a nylon airbag provided that the load on each constituent polyester yarn is such that (1) the yarn does not creep more than a similar nylon yarn, and (2) said polyester airbag will not pass enough hot gas to melt more fiber than would have been melted in the nylon fabric it replaces. Below is a table that compares the thermal properties of polyester to nylon 6,6.

|  | Polyester | Nylon 6,6 |
|---|---|---|
| Melting Temperature, K | 528 | 531 |
| Glass Transition Temperature, °C | 79 | 63 |
| Specific Heat, J/g-K | 1.3 | 1.67 |
| Heat of Fusion, kJ/kg | 130 | 203 |
| Thermal Conductivity, kJ/m-sec-K | 0.15 | 0.23 |

Because nylon 6,6 fabric airbags are in general superior to polyester fabric airbags, it was determined that polymer heat capacity, heat of fusion, and thermal conductivity must play an important role in airbag fabric design. In addition to these variables, airbag design must also take into account the tensile stress applied to the bag upon deployment, required duration of inflation, inflation temperature, and acceptable leakage. To improve the performance of the polyester airbag using a high (> 0.5%) ITC yarn, one can increase the fabric weight and / or reduce the design deployment stress so that the seam opening, fiber melting, and leakage is satisfactory. Also, the inflation temperature can be reduced, which will lessen the amount of melted polymer. The specifics and relationship of the different yarn, fabric, and airbag characteristics, and how they are used to determine the Critical Gas Temperature, will be discussed in detail below.

When designing an airbag module, the peak internal gas pressure and the temperature of the module at deployment are known. The amount of seam opening during deployment is a function of parameters that include deployment temperature, the ITC of a selected yarn, and the weaving density and weight of the fabric. For a passenger or driver side airbag (frontal) module using pyrotechnic inflators, the yarn should not exceed an ITC of about 0.5% for a yarn tested under a 10 cN/Tex load at 100°C. This level of ITC in polyester yarns is equivalent to the ITC of nylon 6,6 yarns that are successfully used in front and side airbags. A higher ITC, however, is acceptable for side curtain airbags.

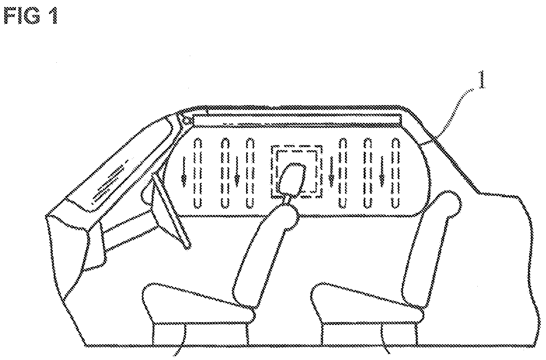

Figure 1 discloses a side-curtain airbag 1 of one aspect of the disclosed invention. Side curtain or roll-over airbags have different performance requirements compared to frontal or side impact bags. Side curtain airbags have a slower rate of fill, which can permit the use of less powerful inflators. For this reason, physical requirements for polyester side curtain airbags, fabrics, and yarns can be less demanding than for other types of airbags. Thus, the ITC of the polyester yarn used in making side curtain airbags can be greater than 0.5%, including about 1% and 3%.

The inflation temperature used in side curtain airbags is typically less than the temperature in frontal airbags due to the suitability of reduced inflation pressure and fill rate in this application. Typically, the gas inflator temperature will range from about 230K to about 1000K, including between about 230K to about 750K, about 350K to about 1000K, about 350K to about 750K, about 350K to about 700K, and about 350K to 650K. Because of the lower gas inflator temperatures, the polyester airbag for side curtain modules can be constructed of polyester yarns having an ITC from greater than 0.5% to about 3%, including greater than 0.6% to about 3.0%, greater than 0.7% to about 3.0%, and greater than 0.5% to about 2.5%.

The hot stretching behavior of the polyester yarn, fabric, and airbag is a function of several variables, including: (1) peak internal gas pressure during airbag deployment; (2) peak internal gas temperature during deployment; (3) temperature of the module at deployment; (4) yarn denier, weaving density, and fabric weight; and (5) the hot creep of the fibers under the above conditions as measured by the ITC of the yarn.

The thermal resistance of yarns used in airbag fabrics is another factor in module design. While high tenacity polyester and nylon 6,6 polymers have approximately the same melting points, the thermal conductivity of polyester is lower and, consequently, less able to dissipate hot spots created by heated gases used in the module to deploy airbags. Further, polyester has a lower heat capacity and heat of fusion which makes polyester yarns heat faster and melt sooner than nylon yarns.

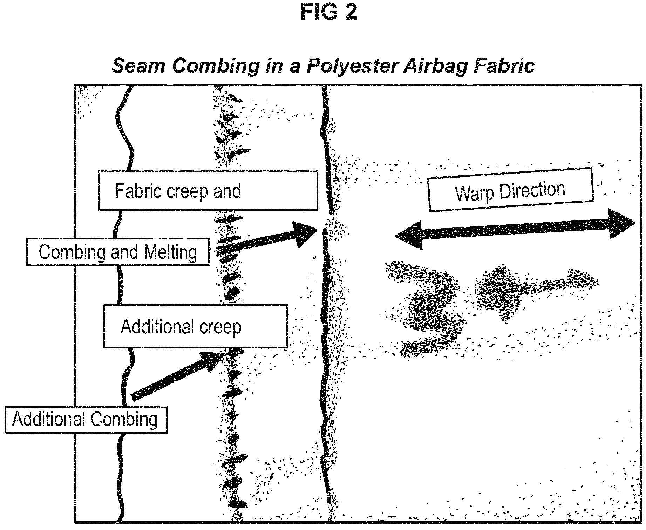

Figure 2 is an example of seam failure with a polyester airbag. Compared to nylon 6,6 airbag fabrics, the issue with polyester airbag fabrics is that during module deployment, small openings (typically along sewn or woven) can open more easily and permit greater gas leakage to occur. In the situation where very hot gas inflators are used, the gas will exit these small openings, more easily melt the polyester yarn in the region, thereby further enlarging the hole and leading to complete bag failure.

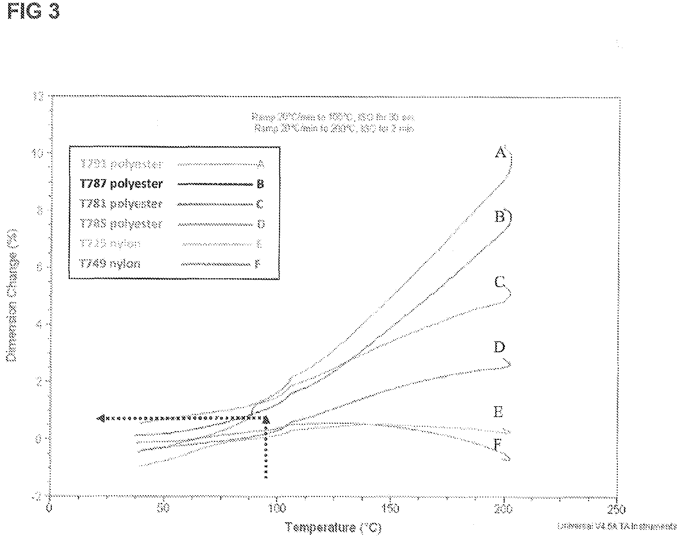

Figure 3 shows the relationship between ITC and temperature, whereby as the temperature increases the ITC increases. Surprisingly, it was found that "seam combing" in polyester airbags was caused by the hot creep (i.e. ITC) properties of the yarn and not a function of the yarn toughness, fabric, coatings, or airbag construction.

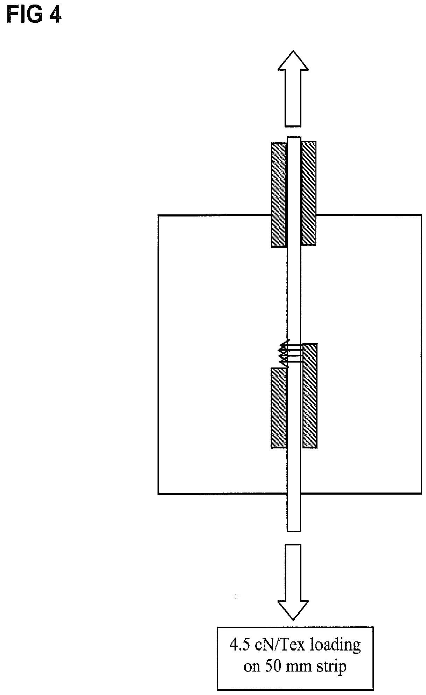

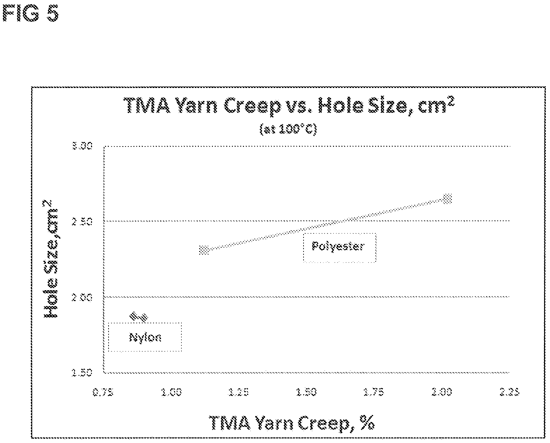

Figures 4 and 5 show the fabric creep test and analysis, respectively, of polyester fabrics. The ITC of polyester yarns correlates to the size of an opening in the weave or seam of a polyester airbag when mounted in the fixture found in ASTM D5822 and heated under load. The more open weave or seam in the airbag provides less resistance to air flow out of the bag which increase the volume of gas that can exit through the point of least resistance. Because of the lower thermal resistance of polyester, there is a limit to the amount of heat transfer from the exiting gas to the polyester fibers and fabric before the polyester fiber and fabric will melt and create larger holes. This destroys the gas holding ability of the bag. Thus, the thermal energy exiting the larger holes must not melt more fiber mass than that melted in a similarly constructed nylon airbag intended for the same use. This thermal energy is directly correlated to the Critical Gas Temperature.

The Critical Gas Temperature of the disclosed polyester airbags can range from about 230K to about 1000K, including between about 230K to about 750K, about 350K to about 1000K, about 350K to about 750K, about 350K to about 700K, and about 350K to 650K. The Critical Gas Temperature of the polyester airbag should be the same or higher than the gas inflator temperature. Correlating the gas inflator temperature to the Critical Gas Temperature of the polyester airbag will ensure that the airbag will not suffer from catastrophic failure.

The polyester fabrics used in the disclosed airbag modules can employ various techniques to reduce gas leakage at highly stressed regions. Such techniques include special seam designs and fabric finishes. For example, more stitching may be added to critical points such as the curved regions of sewn or woven seams. Further, beads of elastomeric gasket material can be applied at the critical points. U.S. Patent Application No. 2006/0040577, hereby incorporated by reference in its entirety, discloses various fabric finishes that can be used to reduce seam combing. The weight of uncoated polyester fabric used in the airbag modules can range from about 150 g/m$^2$ to about 270 g/m$^2$, including 170 g/m$^2$ to about 240 g/m$^2$. The higher the fabric weight, the higher the critical gas temperature of the polyester fabric.

The polyester filament yarns used in the woven fabric of the disclosed airbag modules can have a tenacity of about 65 cN/tex or greater, for example a tenacity of about 65 cN/tex to about 90 cN/tex; a tenacity of about 75 cN/tex or greater, for example a tenacity of about 75 cN/tex to about 90 cN/tex; or a tenacity of about 85 cN/tex or greater, for example a tenacity of about 85 cN/tex to about 90 cN/tex. Lower tenacity yarns require higher deniers to achieve the burst strength require for woven airbag fabrics resulting in thicker fabrics with are difficult to fold. The elongation of the polyester filament yarns used in the woven fabric of this invention can be about 12% or greater, for example from about 12% to about 28%, or from about 12% to about 20%. The tensile index of the yarns can be about 240 or greater, for example from about 240 to about 400 or from about 240 to about 350.

The intrinsic viscosity (IV) of the polyester resin used to manufacture the polyester filament yarns used in the woven fabrics of this invention can be about 0.8 dl/g or greater. Polyester yarns with an IV of less than 0.8 dl/g do not give yarns with sufficient toughness.

Yarn linear densities can be about 250 dtex to about 700 dtex, including about 200 dtex to about 650 dtex, depending on which type of airbag is required. The higher dtex yarns are woven into fabrics for the larger passenger airbags, compared to the lower dtex yarns for the side curtain airbags. The filaments in the yarns for the fabric can be non-round, flatter type filament. Typically, the flatness of filaments is determined by the aspect ratio. The aspect ratio is the ratio of the length to the width of the filament (round cross-sections have an expect ratio of 1.0). Suitable aspect ratios are in the range of about 1 to about 6. Flatter type filaments make the fabric less air permeable.

The dtex of the individual filaments is typically in the range of about 2 to about 7. If the dtex/filament is less than about 2, control of the filament bundle in manufacturing becomes more difficult. If the dtex/filament is greater than about 7, the airbag fabric tends to be stiff and difficult to fold.

The polyester resin for forming the polyester multifilament yarns can be selected from the group consisting of polyethylene terephthalate, polybutylene terephthalate, polyethylene naphthalate, polybutylene naphthalate, polyethylene-1,2-bis(phenoxy)ethane-4,4'-dicarboxylate, poly(1,4)-cyclohexylene-dimethylen terphthalate and copolymers comprising at least one type of recurring units of the above-mentioned polymers, for example, polyethylene terephthalate/isophthalate copolyesters, polybutylene terephthalate/naphthalate copolyesters, polybutylene terephthalate/decanedicarboxylate copolyesters, and mixtures of two or more of the above-mentioned polymers and copolymers.

The polyester resin can be manufactured by the standard methods known to those skilled in the art. For example, one method comprises a melt polymerization process providing amorphous polyester with an IV of about 0.6, followed by solid state polymerization to the required resin IV. Minor amounts of other ingredients may also be present, generally comprising no more than 2% by weight based on the weight of the polyester homopolymer. Such ingredients may include additives like TiO$_2$, or yarn finishes that may, for example, (1) reduce the coefficient of friction of said yarn and fabrics made therefrom; or (2) increase yarn bundle integrity for weaving ; or (3) increase the adhesion of said yarn and fabrics made therefrom to other substances such as rubbers; or (4) to make said yarn more UV stable, and less brittle.

The manufacturing processes for preparing the polyester filament yarns of this invention can include a continuous spin-draw process. For example, in a continuous spin-draw process, the molten filaments from the spinneret are quenched with air, lubricated and wrapped around a feed roll. The feed roll speeds in the range of 400 to 1000 meters/minute can be used. This low oriented and amorphous spun yarn is then drawn at least 4 times through two draw zones to maximize the strength before being relaxed. The feed and draw rolls are heated, and the relax roll can be optionally heated. It has been found that the temperature of the yarn in the relax zone between the second draw roll and relax roll, and the amount of relax in this zone has a large influence on the ITC of the final polyester filament yarn. The exact process details to produce polyester filament yarns will depend on the polymer resin IV, the specific spinning conditions, feed roll speeds, draw ratios, etc.

## EXAMPLES

The following examples compare the properties of nylon 6,6 yarns used in airbag fabrics to the properties of different polyester yarns used to make airbag fabrics. Each nylon 6,6 yarn and polyester yarn described below includes a "T" followed a number which represents the commercial product identifier. Each of the nylon yarns is commercially available from INVISTA S.à r.l. of Wichita, KS and each of the polyester yarns is commercially available from Performance Fibers, Inc. of Richmond, VA.

Test Methods

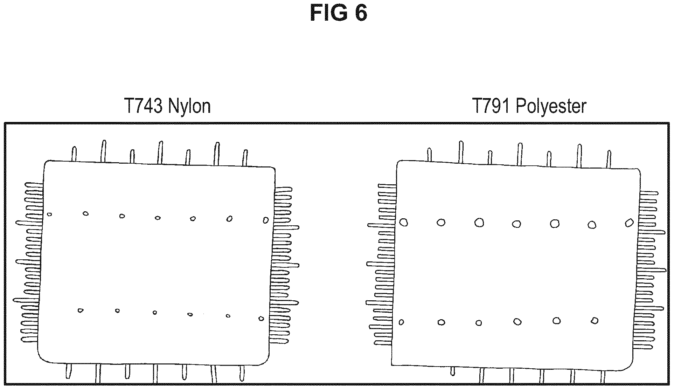

Yarn properties: Tenacity is expressed as cN/tex and elongation using a gauge length of 254 cm and a strain rate of 120%/min (ASTM D885). Linear density (dtex) was measuring using Option 1 of Test Method D1907.
Fabric properties: Fabric weight is expressed as grams per square meter; fabric construction is expressed as threads per centimeter (ASTM D3776); fabric tensile strength (ASTM D5035); fabric tear strength (ASTM D2261).
ITC of yarns: Measures yarn stretch at a constant load of 0.5 g/d while ramping test temperature at 20°C/minute from ambient to 200°C using a Thermal Mechanical Analyzer (TA Instruments, model 2940). The temperature is ramped to 100°C and held for 30 seconds at 100°C and the percentage of yarn elongation is measured with 100°C as the reference point for correlation to hot module performance. The temperature is additionally ramped at 20°C/minute to 200°C to further differentiate yarn behavior.
Fabric Creep Procedure: A length of 50 mm wide fabric is mounted on a load tester using the ASTM D 6479 Seam Combing Fixture and heated to equilibrium at 100°C. A load of 4.5 cN/tex is applied to the fabric for 30 seconds and the fabric removed from the heated chamber (Figure 5). Before and after testing, photomicrographs of the opening where taken and the area of the pinhole openings was measured (Figure 6). This test simulates the initial conditions of a hot module deployment wherein the complete module is heated to a specified temperature and then deployed.
Static Air Permeability: The air permeability of the fabrics before and after the Fabric Creep Procedure is measured in $cm^3/cm^2/sec$ according to the ASTM D737 procedure at a pressure drop of 125 Pa. The difference between the two volumetric air flows divided by the area of the opening is the calculated gas flow through the opening.
Critical gas temperature calculation: A series of calculations allows comparison of the heat flux and temperature rise associated with hot gas flow through pinholes in nylon and polyester airbag fabrics. The calculations are based upon the changes in gas permeability (Static Air Permeability) of fabrics after pin holes are created during a hot deployment stress simulation (Fabric Creep Procedure) and the heat transferred from the outrushing gas at a maximum inflation gas temperature of approximately 1100 K. Nitrogen gas, found in inflators, is used as the model gas for calculations. Using the gas flow, the gas specific density, and gas heat capacity, the heat flux is calculated and assumed to transfer to the fiber in the region of a pin hole. From the heat flux, one calculates the quantity of fiber near the pinhole which is raised to its melting point. Because of its higher gas permeability, lower specific heat and heat of fusion, more polyester fiber than nylon fiber will be raised to its melting point.
Critical gas temperature: The maximum inflator gas temperature for a deployed polyester airbag module at which the quantity of polyester fiber brought to its melting point is the same as for nylon fiber.
Example 1: High strength nylon 6,6 and polyester terephthalate yarns were obtained for comparison. Yarn tensile strength and breaking elongation were measured and the Tensile Factor calculated. Results are report in Table 1 below.

| Table 1: Yarn Properties | | | | | |
|---|---|---|---|---|---|
| | Yarn Type | Linear Density, dtex | Tenacity, cN/tex | % Elongation | Tensile Factor (Tenacity x Elongation $^{0.5}$) |
| 1 | Nylon 6,6 T749 | 470 | 86 | 19 | 375 |
| 2 | Nylon 6,6 T725 | 470 | 81 | 20 | 362 |
| 3 | Polyester T791 | 490 | 72 | 26 | 367 |
| 4 | Polyester T787 | 490 | 69 | 25 | 345 |

Yarn Descriptions: Nylon yarns 1 and 2 are commercially used in frontal and side curtain airbags. Yarn 3 is a polyester yarn subject to major creep problems and failure during hot driver module deployment. Yarn 4 is a commodity yarn for coated or laminated fabrics.

Example 2: Fabrics comprising yarns from Example 1 were woven into plain weave fabrics each weighing approximately 220 g/m$^2$ and tested for basic fabric properties reported in Table 2.

| Table 2: Fabric Tensile Properties (Warp Direction) | | | | | | |
|---|---|---|---|---|---|---|
| | Yarn Type | Weight g/m$^2$ | Construction yarns/cm (WxF) | 50 mm Strip Tensile, N | % Strip Elongation | Tongue Tear, N |
| 1 | Nylon 6,6 T749 | 214 | 17x17 | 3388 | 31 | 258 |
| 2 | Nylon 6,6 T725 | 211 | 18x18 | 3332 | 34 | 226 |
| 3 | Polyester T791 | 201 | 17x17 | 3354 | 35 | 165 |
| 4 | Polyester T787 | 211 | 18x18 | 3180 | 37 | 169 |

Example 3: Yarns from Example 1 are tested for Instantaneous Thermal Creep. ITC is reported in Table 3 below.

| Table 3: Yarn and Fabric Creep Properties | | | |
|---|---|---|---|
| | Yarn Type | % ITC (@ 100C and 0.5 g/d | Size of pin holes after Fabric Creep Test (area of all 24 openings, cm$^2$). |
| 1 | Nylon 6,6 T749 | 0.86 | 1.87 |
| 2 | Nylon 6,6 T725 | 0.90 | 2.02 |
| 3 | Polyester T791 | 2.02 | 2.65 |
| 4 | Polyester T787 | 1.12 | 2.31 |

Unexpectedly, the comparison of Tables 1 and 3 shows that the "toughest" polyester yarn (as measured by the Tensile Factor) has the higher ITC behavior. This departs from industry norm, which is to maximize polyester yarn toughness to absorb the stresses of airbag deployments and make the polyester yarns "more like nylon."

Examples 4-6 step through the various calculations used to determine the Critical Gas Temperature ("CGT") for each fabric. In addition to the variables listed in Tables 3-5 and paragraph 0020 above for each fabric and yarn type, the following variables were used in the calculations:

- Ambient Temp = 373°K

- Critical Gas Temp = 1100°K

- Exiting Gas Temp = 375 °K

- Gas density at critical temperature = 0.000310 g/cm$^3$

- Delta Q, the amount of heat released by nitrogen gas in going from the Critical Gas Temperature to Exiting Gas Temperature, 800.4 J/g

The method of calculation of Delta Q follows: From thermodynamics theory, we know that

$$\Delta Q = c_p(T_1 - T_0)$$

However, the specific heat capacity of nitrogen, $C_p$, is not constant, and is a function of temperature, so the equation has to be solved by integration. The specific heat capacity, cp, can be expressed as a function of temperature using a fourth order polynomial equation:

$$c_p = 1.25 \times 10^{-13}T^4 - 6.13 \times 10^{-10}T^3 + 9.86 \times 10^{-7}T^2 - 4.22 \times 10^{-4}T + 1.09$$

$$\Delta Q = \int_{T_0}^{T_1} (1.25 \times 10^{-13}T^4 - 6.13 \times 10^{-10}T^3 + 9.86 \times 10^{-7}T^2 - 4.22 \times 10^{-4}T + 1.09)(T - T_0)$$

An approximation of this equation can be made by solving for Delta Q at different temperatures, in small intervals, between $T_1$ and $T_0$, and taking the cumulative result. In our example where CTG = 1100°K, Delta Q = 1190.1 J/g, and where the exit temperature is 375°K, Delta Q = 389.7 J/g. So, the heat released when nitrogen is cooled from 1100°K to 375°K is (1190.1-389.7) or 800.4 J/g.

Example 4: The Change in air permeability after creep simulation of fabrics listed in Table 3 was measured using the Static Air Permeability Test. Results are reported in Table 4, below. Calculated gas flow is determined by multiplying the Change in gas permeability by the gas density of nitrogen at 1100K (0.000310 g/cm$^3$). Mass Flux of Gas is determined by multiplying the Calculated gas flow by the Size of pin holes after Fabric Creep Test (Table 3, last column). For example, the calculation of

| Table 4: Air Permeability of Fabrics After Simulated Airbag Fabric Loading | | | | |
|---|---|---|---|---|
| | Yarn Type | Change in air permeability, cm$^3$/cm$^2$/sec (after creep simulation) | Calculated gas flow Air through fabric opening, g/cm$^2$sec (@ 1100 K) | Mass Flux of gas, g/sec (1100 K) (SG=11.4 x 10$^{-4}$ g/cm$^3$). |
| 1 | Nylon 6,6 T749 | 3.52 | 0.001091 | 0.00204 |
| 2 | Nylon 6,6 T725 | 2.61 | 0.0008091 | 0.00163 |
| 3 | Polyester T791 | 12.88 | 0.003993 | 0.01058 |
| 4 | Polyester T787 | 16.41 | 0.005087 | 0.01175 |

For pyrotechnic inflators, a chemical reaction emits nitrogen and other inflation gases and gas temperatures can readily reach 1100 K. Using the Ideal Gas Law (PV = nRT) and heat capacity tables, the number of moles of gas and the total heat flux can be calculated.

Example 5 calculates the Heat Flux, Heat Energy, and Quantity of Fiber Brought to its Melting Point at 1100K. Results are reported in Table 5, below. Heat flux is calculated by multiplying the Mass Flux of Gas (Table 4) by the Delta Q for nitrogen going from the critical gas temperature of 1100K to exiting gas temperature of 375K. Here, Delta Q of nitrogen = 800.4 J/g. Heat Energy is determined by multiplying the Heat Flux by 5 seconds (a typical inflation and air holding time for side curtains). For example, the calculation of Heat flux for Nylon 6,6 T749 would be 0.00204 x 800.4 x 1000 = 1.63; and the calculation of Heat Energy would be 1.63 x 5 = 8.2.

Quantity of Fiber brought to melting point is determined by dividing the Heat Energy by the specific heat of the material (Paragraph 0020), then dividing this number by the difference between the melting temperature of the material and ambient temperature (373K). For example, the calculation for Nylon 6,6 T749 would be: (8.1 / 1.63 / (531-373) = 0.0308).

| Table 5: Quantity of Fiber Brought to its Melting Point | | | | | |
|---|---|---|---|---|---|
| | Yarn Type | Mass Flux of gas, g/sec (1100 K) (SG=11.4 x 10$^{-4}$ g/cm$^3$). | Heat Flux, J/s at 1100K | Heat Energy, J (in 5 sec. at 1100 K) | Quantity of fiber brought to its melting point, g measured @ 1100K. |
| 1 | Nylon 6,6 T749 | 0.00204 | 1.63 | 8.2 | 0.0308 |
| 2 | Nylon 6,6 T725 | 0.00163 | 1.31 | 6.5 | 0.0248 |

(continued)

**Table 5: Quantity of Fiber Brought to its Melting Point**

| | Yarn Type | Mass Flux of gas, g/sec (1100 K) (SG=11.4 x 10$^{-4}$ g/cm$^3$). | Heat Flux, J/s at 1100K | Heat Energy, J (in 5 sec. at 1100 K) | Quantity of fiber brought to its melting point, g measured @ 1100K. |
|---|---|---|---|---|---|
| 3 | Polyester T791 | 0.01058 | 8.46 | 42.3 | 0.2101 |
| 4 | Polyester T787 | 0.01175 | 9.4 | 47.0 | 0.2334 |

Example 6 calculates the Mass Flux of Gas, Heat Flux, Heat Energy, and Critical Gas Temperature necessary to melt 0.0308 g of fabric. Results are reported in Table 6, below. Unlike the above calculations where the temperature was assumed to be 1100K and the quantity of fiber unknown, here temperature is unknown and the quantity of fiber is fixed at 0.0308. Because several variables are a function of temperature, the most efficient method of determining Critical Gas Temperature ("CGT") is found to be an iterative process in which incrementally lower CGT values are substituted in successive steps, and at each step the above equations solved, until a quantity of 0.0308 g is reached. Standard algorithms, such as the simplex algorithm, or iterative solutions packages, such as Microsoft Excel Solver, can be used to assist in the calculations.

**Table 6: Critical Gas Temperature before melting more than 0.0308 grams of fiber**

| | Yarn Type | Mass of gas, g/sec (CGT, K) (SG=11.4 x 10$^{-4}$ g/cm$^3$). | Heat Flux, J/s at CGT, K | Heat Energy, J (in 5 sec. at CGT K) | Critical Gas Temperature (K) before melting more than 0.0308 g of fiber. |
|---|---|---|---|---|---|
| 1 | Nylon 6,6 T749 | 0.00204 | 1.63 | 8.1 | - |
| 2 | Nylon 6,6 T725 | 0.001044 | 1.63 | 8.17 | 1725 |
| 3 | Polyester T791 | 0.00360 | 1.26 | 6.2 | 700 |
| 4 | Polyester T787 | 0.00437 | 1.24 | 6.2 | 644 |

As shown above, heat flux and heat energy are relatively constant for each type of fabric airbag, which is to be expected since the quantity of fiber is fixed, while Mass of Gas varies among the fabrics. Also show is an inverse relationship between Mass of Gas and Critical Gas Temperature

**Claims**

1. An article comprising an airbag module; said airbag module comprising a polyester airbag having a critical gas temperature and a gas inflator, wherein said critical gas temperature is the maximum temperature of the inflator gas before the potential of polyester fiber melting exceeds what is typical of a technically acceptable nylon fiber bag; wherein said gas inflator provides an inflator gas temperature between about 230K and about 750K that does not exceed the critical gas temperature of the polyester airbag, wherein said polyester airbag comprises polyester yarns with 100°C Instantaneous Thermal Creep values greater than 0.5% to 3%, a linear density of about 200 to about 650 dtex and a per filament linear density of 2 to 7 dtex, and an uncoated fabric weight of 150 g/m$^2$ to 270 g/m$^2$.

2. The article of claim 1, wherein said critical gas temperature is between about 350K to about 750K, or wherein said critical gas temperature is between about 350K to about 700K, or wherein said critical gas temperature is between about 350K to about 650K.

3. The article of claim 1, wherein said polyester airbag comprises polyester yarns with 100°C Instantaneous Thermal Creep (ITC) values greater than 0.6% to about 3.0%, or
wherein said polyester airbag comprises polyester yarns with 100°C Instantaneous Thermal Creep (ITC) values greater than 0.7% to about 3.0%, or
wherein said polyester airbag comprises polyester yarns with 100°C Instantaneous Thermal Creep (ITC) values greater than 0.5% to about 2.5%.

4. The article of claim 1 wherein said airbag module is a side curtain airbag module.

5. The article of claim 1 wherein said airbag module is a frontal or side impact module.

6. The article of claim 1, wherein said polyester airbag comprises a polyester fabric having an uncoated fabric weight of about 170 g/m$^2$ to about 240 g/m$^2$.

7. The article of claim 1, wherein said polyester airbag comprises a coated fabric and, optionally wherein said coated fabric comprises a cured elastomeric coating.

8. The article of claim 1, wherein said polyester airbag comprises a one piece woven airbag.

9. A method of designing an airbag module comprising:

   (a) selecting a polyester airbag having a critical gas temperature, wherein said polyester airbag comprises polyester yarns with 100°C Instantaneous Thermal Creep values greater than 0.5% to 3%, a linear density of about 200 to about 650 dtex and a per filament linear density of 2 to 7 dtex, and an uncoated fabric weight of 150 g/m$^2$ to 270 g/m$^2$;
   (b) determining the critical gas temperature of said polyester airbag;
   (c) providing a gas inflator that provides a gas temperature which does not exceed the critical gas temperature of the polyester airbag; and
   (d) combining said polyester airbag with said gas inflator to provide said airbag module;

   wherein said critical gas temperature is the maximum temperature of the inflator gas before the potential of polyester fiber melting exceeds what is typical of a technically acceptable nylon fiber bag.

10. The method of claim 9, wherein the determining the critical gas temperature further includes testing the air permeability of fabrics after airbag fabric loading under simulated deployment conditions.

**Patentansprüche**

1. Artikel, umfassend ein Airbagmodul, wobei das Airbagmodul einen Polyesterairbag mit einer kritischen Gastemperatur und einem Gasinflator umfasst, wobei die kritische Gastemperatur die maximale Temperatur des Inflatorgases ist, bevor das Potenzial der Polyesterfaserschmelze einen Wert überschreitet, der für einen technisch akzeptablen Nylonfaserbeutel typisch ist,
   wobei der Gasinflator eine Inflatorgastemperatur zwischen etwa 230 K und etwa 750 K bereitstellt, die typischerweise die kritische Gastemperatur des Polyesterairbags nicht überschreitet, wobei der Polyesterairbag Polyestergarne mit momentanen thermischen Kriechwerten bei 100 °C von mehr als 0,5 % bis 3 %, einer linearen Dichte von etwa 200 bis etwa 650 dtex und einer linearen Dichte pro Filament von 2 bis 7 dtex und einem unbeschichteten Stoffgewicht von 150 g/m$^2$ bis 270 g/m$^2$ umfasst.

2. Artikel nach Anspruch 1, wobei die kritische Gastemperatur zwischen etwa 350 K bis etwa 750 K liegt, oder
   wobei die kritische Gastemperatur zwischen etwa 350 K bis etwa 700 K liegt, oder
   wobei die kritische Gastemperatur zwischen etwa 350 K bis etwa 650 K liegt.

3. Artikel nach Anspruch 1, wobei der Polyesterairbag Polyestergarne mit momentanen thermischen Kriechwerten bei 100 °C (Instantaneous Thermal Creep = ITC) von mehr als etwa 0,6 % bis etwa 3,0 % umfasst, oder
   wobei der Polyesterairbag Polyestergarne mit momentanen thermischen Kriechwerten bei 100 °C (Instantaneous Thermal Creep = ITC) von mehr als etwa 0,7 % bis etwa 3,0 % umfasst, oder
   wobei der Polyesterairbag Polyestergarne mit momentanen thermischen Kriechwerten bei 100 °C (Instantaneous Thermal Creep = ITC) von mehr als etwa 0,5 % bis etwa 2,5 % umfasst.

**4.** Artikel nach Anspruch 1, wobei das Airbagmodul ein seitliches Vorhangairbagmodul ist.

**5.** Artikel nach Anspruch 1, wobei das Airbagmodul ein Frontal- oder Seitenaufprallmodul ist.

**6.** Artikel nach Anspruch 1, wobei der Polyesterairbag einen Polyesterstoff mit einem unbeschichteten Stoffgewicht von etwa 170 g/m$^2$ bis etwa 240 g/m$^2$ umfasst.

**7.** Artikel nach Anspruch 1, wobei der Polyesterairbag einen beschichteten Stoff umfasst und wobei der beschichtete Stoff wahlweise eine gehärtete Elastomerbeschichtung umfasst.

**8.** Artikel nach Anspruch 1, wobei der Polyesterairbag einen einstückigen gewebten Airbag umfasst.

**9.** Verfahren zum Gestalten eines Airbagmoduls, umfassend:

(a) Auswählen eines Polyester-Airbags mit einer kritischen Gastemperatur, wobei der Polyesterairbag Polyestergarne mit momentanen thermischen Kriechwerten bei 100 °C von mehr als 0,5 % bis 3 %, einer linearen Dichte von etwa 200 bis etwa 650 dtex und einer linearen Dichte pro Filament von 2 bis 7 dtex und einem unbeschichteten Stoffgewicht von 150 g/m$^2$ bis 270 g/m$^2$ umfasst;
(b) Bestimmen der kritischen Gastemperatur des Polyesterairbags;
(c) Bereitstellen eines Gasinflators, der eine Gastemperatur bereitstellt, die die kritische Gastemperatur des Polyesterairbags nicht überschreitet; und
(d) Kombinieren des Polyesterairbags mit dem Gasinflator, um das Airbagmodul bereitzustellen;

wobei die kritische Gastemperatur die maximale Temperatur des Inflatorgases ist, bevor das Potenzial der Polyesterfaserschmelze einen Wert überschreitet, der für einen technisch akzeptablen Nylonfaserbeutel typisch ist.

**10.** Verfahren nach Anspruch 9, wobei das Bestimmen der kritischen Gastemperatur ferner das Prüfen der Luftdurchlässigkeit von Stoffen nach einer Airbagstoffbelastung unter simulierten Auslösebedingungen beinhaltet.

## Revendications

**1.** Article comprenant un module d'airbag ; ledit module d'airbag comprenant un airbag en polyester ayant une température de gaz critique et un gonfleur à gaz, la température de gaz critique étant la température maximale du gaz du gonfleur avant que le potentiel de fusion de la fibre de polyester ne dépasse ce qui est typique d'un sac en fibre de nylon techniquement acceptable ;
dans lequel ledit gonfleur à gaz produit une température de gaz de gonfleur d'environ 230 K à environ 750 K qui ne dépasse pas la température de gaz critique de l'airbag en polyester, ledit airbag en polyester comprenant des fils de polyester ayant des valeurs de fluage thermique instantané à 100 °C supérieures à 0,5 % à 3 %, une densité linéaire d'environ 200 dtex à environ 650 dtex et une densité linéaire par filament de 2 dtex à 7 dtex, et un poids de tissu non enduit de 150 g/m$^2$ à 270 g/m$^2$.

**2.** Article selon la revendication 1, dans lequel ladite température de gaz critique est d'environ 350 K à environ 750 K, ou
dans lequel ladite température de gaz critique est d'environ 350 K à environ 700 K, ou
dans lequel ladite température de gaz critique est d'environ 350 K à environ 650 K.

**3.** Article selon la revendication 1, dans lequel ledit airbag en polyester comprend des fils de polyester ayant des valeurs de fluage thermique instantané (FTI) à 100 °C supérieures à 0,6 % à environ 3,0 %, ou
dans lequel ledit airbag en polyester comprend des fils de polyester ayant des valeurs de fluage thermique instantané (FTI) à 100 °C supérieures à 0,7 % à environ 3,0 %, ou
dans lequel ledit airbag en polyester comprend des fils de polyester ayant des valeurs de fluage thermique instantané (FTI) à 100 °C supérieures à 0,5 % à environ 2,5 %.

**4.** Article selon la revendication 1, dans lequel ledit module d'airbag est un module d'airbag en rideau latéral.

**5.** Article selon la revendication 1, dans lequel ledit module d'airbag est un module conçu pour un impact frontal ou latéral.

**6.** Article selon la revendication 1, dans lequel ledit airbag en polyester comprend un tissu de polyester ayant un poids de tissu non enduit d'environ 170 g/m$^2$ à environ 240 g/m$^2$.

**7.** Article selon la revendication 1, dans lequel ledit airbag en polyester comprend un tissu enduit et, optionnellement dans lequel ledit tissu enduit comprend un revêtement élastomère durci.

**8.** Article selon la revendication 1, dans lequel ledit airbag en polyester comprend un airbag tissé en une seule pièce.

**9.** Procédé de conception d'un module d'airbag, comprenant :

(a) la sélection d'un airbag en polyester ayant une température de gaz critique, ledit airbag en polyester comprenant des fils de polyester ayant des valeurs de fluage thermique instantané à 100 °C supérieures à 0,5 % à 3 %, une densité linéaire d'environ 200 dtex à environ 650 dtex et une densité linéaire par filament de 2 dtex à 7 dtex, et un poids de tissu non enduit de 150 g/m$^2$ à 270 g/m$^2$;
(b) la détermination de la température de gaz critique dudit airbag en polyester ;
(c) la fourniture d'un gonfleur à gaz qui produit une température de gaz qui ne dépasse pas la température de gaz critique de l'airbag en polyester ; et
(d) la combinaison dudit airbag en polyester avec ledit gonfleur à gaz pour produire ledit module d'airbag ;

ladite température de gaz critique étant la température maximale du gaz du gonfleur avant que le potentiel de fusion de la fibre de polyester ne dépasse ce qui est typique d'un sac en fibre de nylon techniquement acceptable.

**10.** Procédé selon la revendication 9, dans lequel la détermination de la température de gaz critique comprend en outre une évaluation de la perméabilité à l'air de tissus après le chargement du tissu de l'airbag dans des conditions simulées de déploiement.

FIG 1

# FIG 6

T743 Nylon

T791 Polyester

**FIG 3**

**FIG 4**

4.5 cN/Tex loading
on 50 mm strip

FIG 5

TMA Yarn Creep vs. Hole Size, cm²
(at 100°C)

# FIG 2

## *Seam Combing in a Polyester Airbag Fabric*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5236775 A
- US 5637114 A
- US 5540965 A
- JP 7186858 A
- EP 0442373 A
- US 5902672 A
- US 7375042 B
- JP 7090747 A
- DE 102009009905 A1
- US 20060040577 A